(19) Europäisches Patentamt
European Patent Office
Office européen des brevets

(11) **EP 4 339 070 A1**

(12) **EUROPEAN PATENT APPLICATION**
published in accordance with Art. 153(4) EPC

(43) Date of publication:
**20.03.2024 Bulletin 2024/12**

(21) Application number: **22807371.4**

(22) Date of filing: **28.04.2022**

(51) International Patent Classification (IPC):
**B61L 27/00** *(2022.01)* **B60L 15/40** *(2006.01)*

(52) Cooperative Patent Classification (CPC):
**B60L 15/40; B61L 27/00;** Y02T 90/16

(86) International application number:
**PCT/JP2022/019267**

(87) International publication number:
**WO 2022/239669 (17.11.2022 Gazette 2022/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.05.2021 JP 2021082372**

(71) Applicant: **Hitachi, Ltd.**
**Tokyo 100-8280 (JP)**

(72) Inventors:
• **MATSUO, Kazuki**
**Tokyo 100-8280 (JP)**
• **KIMURA, Shota**
**Tokyo 100-8280 (JP)**
• **KUROSAWA, Yuki**
**Tokyo 100-8280 (JP)**
• **ISHIKAWA, Katsumi**
**Tokyo 100-8280 (JP)**

(74) Representative: **Mewburn Ellis LLP**
**Aurora Building**
**Counterslip**
**Bristol BS1 6BX (GB)**

(54) **OPERATION ASSISTANCE SYSTEM AND OPERATION ASSISTANCE METHOD**

(57) As an driver assistance system that supports operation of a train in order to use regenerative power generated by a traveling deceleration-side train as power for driving the power-running-side train without causing a delay in the power-running-side train departing from a station, the driver assistance system includes: a first on-board device mounted on at least one stopping train; a second on-board device mounted on at least one traveling train; and a ground-side device that communicates information with the first on-board device and the second on-board device via a transmission line. The ground-side device generates a deceleration pattern of the traveling train based on power running start information of the stopping train obtained from at least reception information from the first on-board device, and transmits the deceleration pattern to the second on-board device.

FIG. 1

EP 4 339 070 A1

**Description**

Technical Field

The present invention relates to a driver assistance system and a driver assistance method for an electric railway.

Background Art

In recent years, from the viewpoint of environmental load reduction and cost reduction, improvement of energy efficiency is also desired in a railway. In an electric railway, effective use of a regenerative brake has attracted attention as a means for improving energy efficiency.

The regenerative brake is a deceleration means for securing a braking force by an electromotive force of a motor mounted on a train, and can be reused by converting kinetic energy of the train consumed as heat in the conventional friction brake into power.

The power (regenerative power) generated by the regenerative brake is supplied as driving power for another train via an overhead line. However, when there is no train consuming regenerative power, the regenerative power cannot be used. For this reason, in order to effectively use the regenerative power, a technique for controlling the operation of the train so as to drive another train according to the generation of the regenerative power is required.

As a technique for coping with such a problem, an operation management device disclosed in PTL 1 is known. PTL 1 discloses a technique in which a regenerative braking operation start time of a traveling train is predicted, and a departure time of a train stopping at a station is made to wait until the predicted regenerative braking operation start time, so that a train departing from the station can use regenerative power.

Citation List

Patent Literature

PTL 1: JP 2017-109576 A

Summary of Invention

Technical Problem

In the technique described in PTL 1, the station departure time of the train whose operation is controlled according to the regenerative train is delayed with respect to the operation schedule. As a result, the train after departure from the station needs to be driven at a higher speed than usual in order to eliminate the delay, and there is a problem that energy consumption is larger than that in normal driving.

Therefore, in order to cope with this problem, an object of the present invention is to provide a system and a method for assisting operation of a train in order to effectively use regenerative power generated by a traveling deceleration-side train as power for driving a power-running-side train without causing a delay in the power-running-side train departing from a station.

Solution to Problem

In order to solve the above problems, one of the representative driver assistance systems of the present invention includes: a first on-board device mounted on at least one stopping train; a second on-board device mounted on at least one traveling train; and a ground-side device that communicates information with the first on-board device and the second on-board device via a transmission line, in which the ground-side device generates a deceleration pattern of the traveling train based on power running start information of the stopping train obtained from at least reception information from the first on-board device, and transmits the deceleration pattern to the second on-board device.

Advantageous Effects of Invention

According to the present invention, by providing the train driver assistance device capable of predicting the power running start time of the power-running-side train and reflecting the predicted power running start time in the adjustment of the regenerative brake start time of the regenerative-side train even when the travel of the train is delayed from a predetermined operation schedule, it is possible to efficiently use the regenerative power by the regenerative brake of the train and reduce the energy consumption related to the train operation.

Problems, configurations, and effects other than those described above will become apparent from the following description of embodiments for carrying out the invention.

Brief Description of Drawings

[FIG. 1] FIG. 1 is a diagram illustrating a configuration of a driver assistance system according to a first embodiment of the present invention and a train to be a driver assistance target.
[FIG. 2] FIG. 2 is a diagram illustrating a flow (flowchart) of processing executed by a calculation unit included in a ground-side device of the driver assistance system in the case of the first embodiment.
[FIG. 3] FIG. 3 is a diagram illustrating a driving curve of a second train (deceleration-side train) according to the flowchart illustrated in FIG. 2.
[FIG. 4] FIG. 4 is a diagram illustrating an effect of the driver assistance system according to the first embodiment.
[FIG. 5] FIG. 5 is a diagram illustrating a flow (flowchart) of processing executed by a calculation unit included in a ground-side device of a driver assistance system in the case of a second embodiment.
[FIG. 6] FIG. 6 is a diagram illustrating a driving curve of a second train (deceleration-side train) according to the flowchart illustrated in FIG. 5.
[FIG. 7] FIG. 7 is a diagram illustrating an effect of the driver assistance system according to the second embodiment.
[FIG. 8] FIG. 8 is a diagram illustrating a configuration of a driver assistance system according to a third embodiment of the present invention and a train to be a driver assistance target.
[FIG. 9] FIG. 9 is a diagram illustrating a flow (flowchart) of processing executed by a calculation unit and a power running time prediction unit included in a ground-side device of the driver assistance system in the case of the third embodiment.
[FIG. 10] FIG. 10 is a diagram illustrating a driving curve of a second train (deceleration-side train) according to the flowchart illustrated in FIG. 9.
[FIG. 11] FIG. 11 is a diagram illustrating an effect of the driver assistance system according to the third embodiment.
[FIG. 12] FIG. 12 is a diagram illustrating a configuration of a driver assistance system according to a fourth embodiment of the present invention and a train to be a driver assistance target.
[FIG. 13] FIG. 13 is a diagram illustrating a flow (flowchart) of processing executed by a calculation unit and a power running time prediction unit included in a ground-side device of the driver assistance system in the case of the fourth embodiment.
[FIG. 14] FIG. 14 is a diagram illustrating a case where only deceleration is used as a variable of an objective function for an effect of the driver assistance system according to the fourth embodiment.
[FIG. 15] FIG. 15 is a diagram illustrating a configuration of a driver assistance system according to a fifth embodiment of the present invention and a train to be a driver assistance target.
[FIG. 16] FIG. 16 is a diagram illustrating a flow (flowchart) of processing executed by a calculation unit and a power running time prediction unit included in a ground-side device of the driver assistance system in the case of the fifth embodiment.
[FIG. 17] FIG. 17 is a diagram illustrating an effect of the driver assistance system according to the fifth embodiment.

Description of Embodiments

Hereinafter, as a mode for carrying out the present invention, first to fifth embodiments will be described with reference to the drawings. Note that the present invention is not limited by these embodiments. In addition, at least the meanings of the reference signs and the like mentioned in the description of the first embodiment are also incorporated in the description of other embodiments as synonyms.

[First embodiment]

In the first embodiment, in a cab of a power-running-side train, a determined power running start time is obtained using information (hereinafter, referred to as "power running notch input information") to which a power running notch is input, a traveling pattern in which deceleration starts from the power running start time is generated, and train operation control is performed according to the generated traveling pattern.

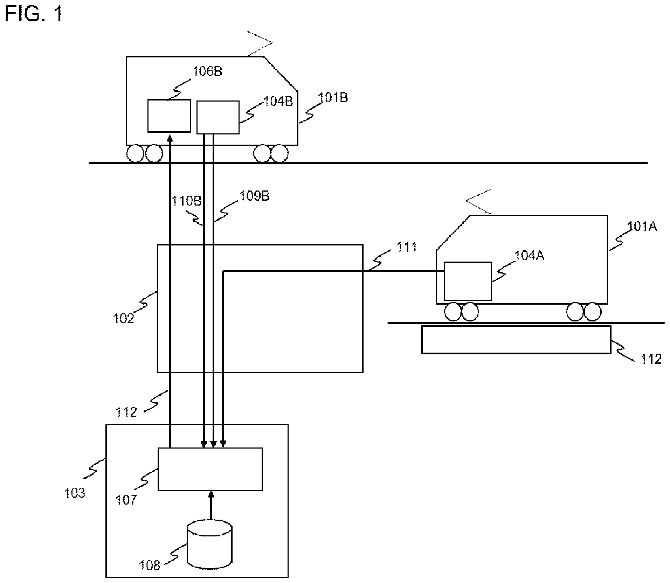

FIG. 1 is a diagram illustrating a configuration of a driver assistance system according to the first embodiment of the present invention and a train to be a driver assistance target. The configuration of the driver assistance system is the same as that of a second embodiment described later.

Here, the driver assistance system according to the first embodiment of the present invention includes an on-board device 104A mounted on a first train 101A, an on-board device 104B and a driving control device 106B mounted on a second train 101B, a ground-side device 103, and a transmission line 102 for mutually communicating information related to these devices. Here, in all the embodiments of the present invention, an on-board device mounted on the train may be configured to include the same mounted driving control device.

The ground-side device 103 includes at least a calculation unit 107 and a schedule database 108 that stores each station departure time for each train.

The first train 101A is stopped at a station 113, and transmits power running notch input information 111 from the on-board device 104A to the ground-side device 103 via the transmission line 102.

The second train 101B is traveling, and transmits position information 109B and speed information 110B from the on-board device 104B to the ground-side device 103 via the transmission line 102.

In the ground-side device 103, the calculation unit 107 uses the power running notch input information 111 received from the on-board device 104A of the first train 101A as a trigger for starting the power running of the train 101A, generates a target deceleration pattern 112 of the second train 101B using the schedule database 108 based on the position information 109B and the speed information 110B received from the second train 101B, and transmits the target deceleration pattern 112 to the second train 101B via the transmission line 102.

In the second train 101B, the driving control device 106B controls the speed of the train so as to follow the target deceleration pattern 112 received from the ground-side device 103.

Here, the transmission line 102 includes a known wireless line such as a public wireless line such as a mobile phone, or a dedicated wireless line for a railway such as a train radio or a train signal device.

In addition, a driving control device 106 (the driving control device 106B in the second train 101B) mounted on the train side includes an automatic train driving device that automatically follows a given target driving pattern or a train driver assistance system that can follow an driving pattern instructed to an operator by manual operation.

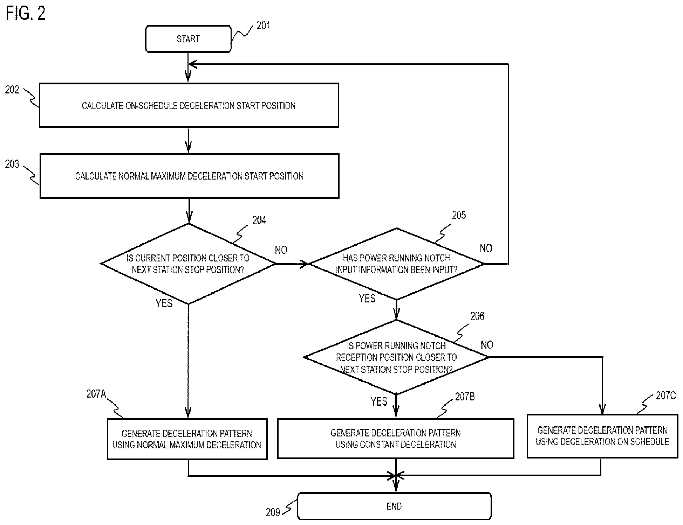

FIG. 2 is a diagram illustrating a flow (flowchart) of processing executed by the calculation unit 107 included in the ground-side device 103 of the driver assistance system in the case of the first embodiment. Hereinafter, the notation of the calculation unit 107 that is the execution subject of each process is omitted.

In a process 202, a deceleration start position 302C (hereinafter, referred to as "on-schedule deceleration start position 302C") necessary for the second train (deceleration-side train) 101B to stop at the next station with the minimum deceleration (hereinafter, referred to as "deceleration on schedule") necessary for stopping at the stop position of the next station at the next station arrival time on the schedule from the current speed 110B is calculated. Thereafter, the processing proceeds to a process 203.

In the process 203, a normal maximum deceleration start position 302A necessary for the second train (deceleration-side train) 101B to stop at the next station at the normal maximum deceleration at the next station arrival time on the schedule from the current speed 110B is calculated. Thereafter, the process proceeds to a conditional branch 204.

In the conditional branch 204, the current position 109B of the second train (deceleration-side train) 101B is compared with the normal maximum deceleration start position 302A, and it is determined whether or not the current position 109B is closer to a next station stop position 301 than the normal maximum deceleration start position 302A.

If the current position 109B is closer to the next station stop position 301 than the normal maximum deceleration start position 302A (YES), the processing proceeds to a process 207A, and if not (NO), the processing proceeds to a conditional branch 205.

In the conditional branch 205, it is determined whether the power running notch input information 111 has been input.

If the input of the power running notch input information 111 is confirmed (YES), the processing proceeds to the conditional branch 206, and if not confirmed (NO), the process returns to the process 202.

In the conditional branch 206, the position 302B (hereinafter, referred to as "power running notch reception position 302B") at which the power running notch input information 111 has been received is compared with the on-schedule deceleration start position 302C, and it is determined whether or not the power running notch reception position 302B is closer to the next station stop position 301 than the on-schedule deceleration start position 302C. As a result of the determination, if it is close (YES), the processing proceeds to a process 207B, and otherwise (NO), the processing proceeds to a process 207C.

In the process 207A, a deceleration pattern 303A in which the second train (deceleration-side train) 101B stops at the next station at the normal maximum deceleration is generated and set as the target deceleration pattern 112.

In the process 207B, a deceleration pattern 303B in which the second train (deceleration-side train) 101B starts deceleration from the power running notch reception position 302B and stops at the next station at a constant deceleration $\beta$ is generated and set as the target deceleration pattern 112.

As the deceleration $\beta$, a value that satisfies simultaneous equations of the following equations (1.1) to (1.4) is given. As a result, the deceleration pattern 303B for stopping the train at the next station stop position 301 at the constant deceleration $\beta$ from the power running notch reception position 302B can be generated.
[Equation 1]

$$v(t) = v_0 - \beta t \qquad \text{Equation (1.1)}$$

[Equation 2]

$$x(t) = \int v(t)dt \qquad \text{Equation (1.2)}$$

[Equation 3]

$$v(\Delta t) = 0 \qquad \text{Equation (1.3)}$$

[Equation 4]

$$x(\Delta t) = \Delta x \qquad \text{Equation (1.4)}$$

Here, time: t, speed: v, position: x are variables, speed 110B: $v_0$, distance from the power running notch reception position 302B to the next station stop position 301: $\Delta x$, remaining time until the next station stop time on the schedule: $\Delta t$

In the process 207C, a deceleration pattern 303C in which the second train (deceleration-side train) 101B stops at the next station at the deceleration on the schedule is generated and set as the target deceleration pattern 112.

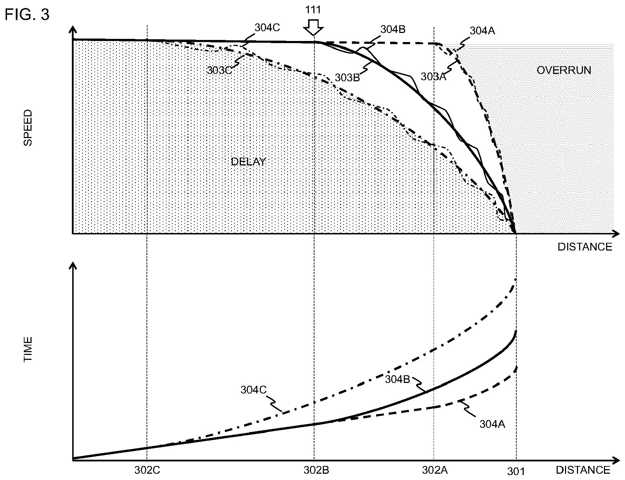

FIG. 3 is a diagram illustrating a driving curve of the second train (deceleration-side train) 101B according to the flowchart illustrated in FIG. 2.

(A) When the power running notch input information 111 is not received until the normal maximum deceleration start position 302A, the calculation unit 107 generates the deceleration pattern 303A in which the second train (deceleration-side train) 101B starts deceleration from the normal maximum deceleration start position 302A and the speed becomes 0 at the next station stop position 301.

The driving control device 106B controls the speed of the second train (deceleration-side train) 101B to follow the target deceleration pattern 112 (deceleration pattern 303A) received from the calculation unit 107, so that the second train (deceleration-side train) 101B travels like a travel history 304A.

(B) When the train is closer to the next station than the on-schedule deceleration start position 302C and the power running notch input information 111 is received, the calculation unit 107 generates the deceleration pattern 303B in which the second train (deceleration-side train) 101B starts to decelerate from the power running notch reception position 302B and the speed becomes 0 at the next station stop position 301.

The driving control device 106B controls the speed of the second train (deceleration-side train) 101B to follow the target deceleration pattern 112 (deceleration pattern 303B) received from the calculation unit 107, so that the second train (deceleration-side train) 101B travels like a travel history 304B.

(C) When the power running notch input information 111 is received before the on-schedule deceleration start position 302C, the calculation unit 107 generates the deceleration pattern 303C in which the second train (deceleration-side train) 101B starts deceleration from the on-schedule deceleration start position 302C and the speed becomes 0 at the next station stop position 301.

The driving control device 106B controls the speed of the second train (deceleration-side train) 101B to follow the target deceleration pattern 112 (deceleration pattern 303C) received from the calculation unit 107, so that the second train (deceleration-side train) 101B travels like a travel history 304C.

In addition, when the power running of the first train (power-running-side train) 101A ends while the second train (deceleration-side train) 101B is decelerating, the deceleration may be continued at the deceleration as it is, or a more energy-saving pattern may be recalculated according to the on-track position and speed.

In this manner, the second train (deceleration-side train) 101B can start deceleration in accordance with the target deceleration pattern 112 corresponding to the input time of the power running notch and stop at the next station stop position 301.

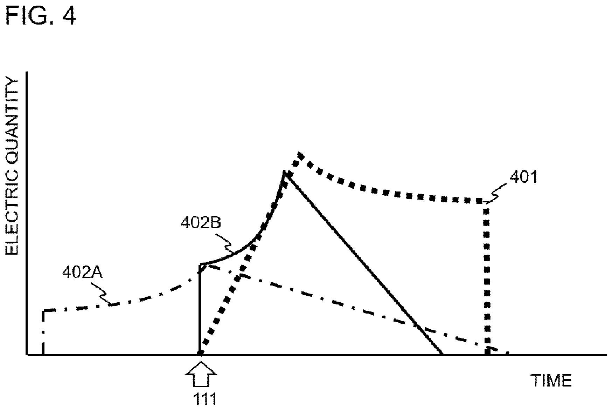

FIG. 4 is a diagram illustrating an effect of the driver assistance system according to the first embodiment.

In the drawing, a waveform (dotted line) of power running power 401 by the first train (power-running-side train) 101A and waveforms (402A and 402B) of regenerative power 402 by the second train (deceleration-side train) 101B are illustrated, and the overlapped portion is the regenerative power that can be used by the first train (power-running-side train) 101A. The regenerative power 402A (alternate long and short dash line) is a case where there is no control by the driver assistance system, and the regenerative power 402B (solid line) is a case where control by the driver assistance system works.

Since the regenerative power 402A (alternate long and short dash line) rises faster than the power running power 401, a large portion does not overlap the power running power 401. On the other hand, the regenerative power 402B (solid line) rises at the same time as the power running power 401 by the reception of the power running notch input information 111, so that the portion overlapping the power running power 401 increases.

As described above, according to the driver assistance system according to the first embodiment, the deceleration of the traveling train is started in accordance with the departure of the train stopping at the station, so that the regenerative power can be effectively used as the driving power of the train departing from the station.


[Second embodiment]

A deceleration pattern generated by a driver assistance system according to the second embodiment is different from the deceleration pattern generated by the driver assistance system according to the first embodiment in that an effect of avoiding early arrival of the deceleration-side train can be obtained. Here, the configuration of the driver assistance system according to the second embodiment is the same as the configuration of the driver assistance system according to the first embodiment.

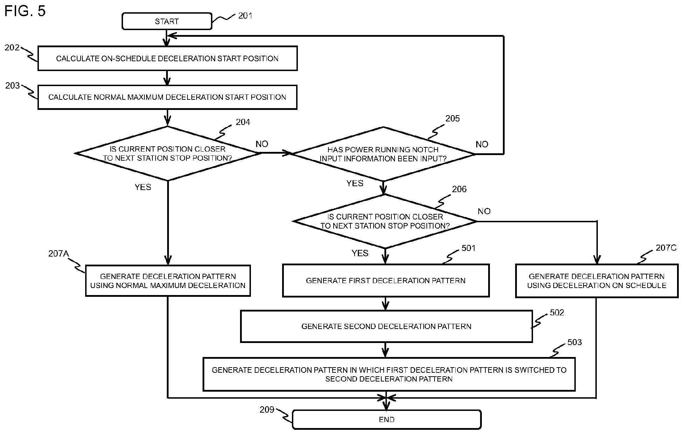

FIG. 5 is a diagram illustrating a flow (flowchart) of processing executed by a calculation unit 107 included in a ground-side device 103 of the driver assistance system in the case of the second embodiment.

The second embodiment is different from the first embodiment in that a process 501, a process 502, and a process 503 are executed instead of the process 207B in the flowchart of the first embodiment. Although the execution subject of these processes is also the calculation unit 107, the description thereof will be omitted below.

In the process 501, a first deceleration pattern 602A for decelerating at a first deceleration β1 from a speed 110B is generated at a current position 109B of a second train (deceleration-side train) 101B.

In the process 502, a second deceleration pattern 602B in which the second train (deceleration-side train) 101B stops at a next station stop position 301 at a next station stop time on a schedule at a second deceleration β2 (β1 > β2) different from the first deceleration β1 is generated.

In the process 503, a position 601 (hereinafter, referred to as "deceleration change point 601") at which the first deceleration pattern 602A and the second deceleration pattern 602B intersect is derived. That is, a deceleration pattern 603 in which the first deceleration pattern 602A is switched to the second deceleration pattern 602B at the deceleration change point 601, the first deceleration pattern 602A is set before the deceleration change point 601, and the second deceleration pattern 602B is set on the next station stop position 301 side from the deceleration change point 601 is generated as a target deceleration pattern 112.

As the first deceleration β1 and the second deceleration β2, values satisfying the simultaneous equations of the equations (2.1) to (2.4) are respectively given. As a result, the second train (deceleration-side train) 101B can decelerate from the power running notch reception position 302B and stop at the next station stop position 301 at the next station arrival time on the schedule.

[Equation 5]

$$v(t) = \begin{cases} v_0 - \beta_1 t, & t < t_1 \\ v_0 - \beta_1 t_1 - \beta_2(t - t_1), & t \geq t_1 \end{cases} \qquad \text{Equation (2.1)}$$

[Equation 6]

$$x(t) = \int v(t)dt \qquad \text{Equation (2.2)}$$

[Equation 7]

$$v(\Delta t) = 0 \qquad \text{Equation (2.3)}$$

[Equation 8]

$$x(\Delta t) = \Delta x \qquad \text{Equation (2.4)}$$

Here, time: t, speed: v, position: x are variables, speed 110B: $v_0$, remaining time until the next station stop time on the schedule: $\Delta t$, distance from the deceleration change point 601 to the next station stop position 301: $\Delta x$, and time

until switching from the first deceleration β1 to the second deceleration β2: t1.

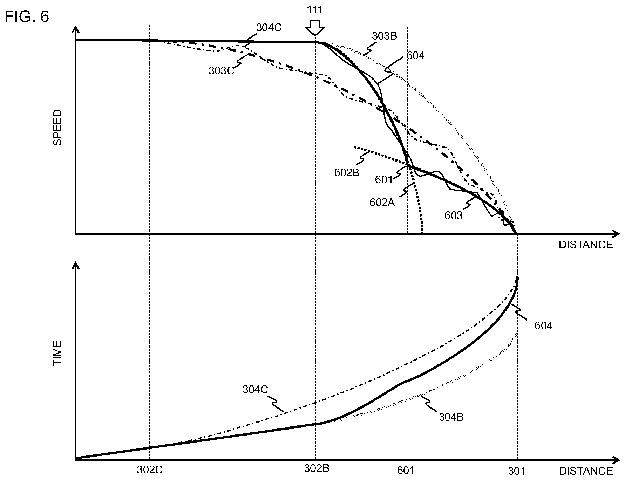

FIG. 6 is a diagram illustrating a driving curve of the second train (deceleration-side train) 101B according to the flowchart illustrated in FIG. 5. However, the traveling characteristics of the second train (deceleration-side train) 101B when power running notch input information 111 is not received or when the power running notch input information 111 is received before an on-schedule deceleration start position 302C (position far from the next station stop position 301) are the same as those in the first embodiment, and thus are omitted.

When the power running notch input information 111 is received at a position farther from the on-schedule deceleration start position 302C (position closer to the next station stop position 301), the calculation unit 107 generates, as the target deceleration pattern 112, the deceleration pattern 603 that matches a deceleration pattern 602A of the deceleration β1 on the near side (position farther from the next station stop position 301) and a deceleration pattern 602B that decelerates at the deceleration β2 on the far side (position closer to the next station stop position 301) with the deceleration change point 601 as a boundary.

A driving control device 106B controls the speed to follow the deceleration pattern 603 as the target deceleration pattern 112, so that the second train (deceleration-side train) 101B travels as in a travel history 604.

As a result, the second train (deceleration-side train) 101B stops at the next station stop position 301 at the stop time on the schedule, so that it is possible to avoid early arrival. That is, as compared with the arrival time at the next station stop position 301 (the diagram of the lower time characteristics in FIG. 3) according to a travel history 304B in the case of a deceleration pattern 303B in the first embodiment, the arrival time at the next station stop position 301 (the diagram of the lower time characteristics in FIG. 6) according to the travel history 604 in the case of the deceleration pattern 603 in the second embodiment indicates that the train arrives at the same time as the arrival time (stop time on the schedule) according to a deceleration pattern 303C from the on-schedule deceleration start position 302C without arriving early.

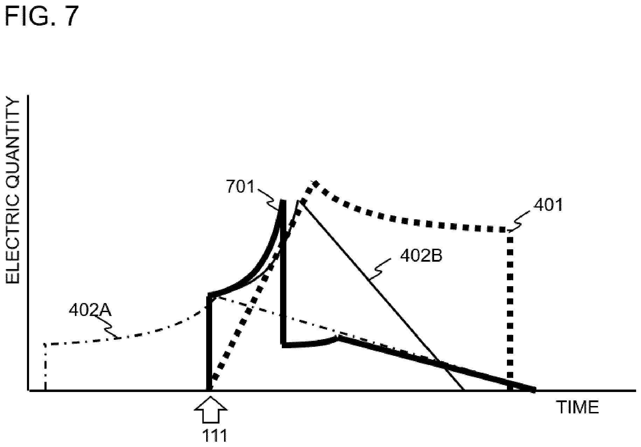

FIG. 7 is a diagram illustrating an effect of the driver assistance system according to the second embodiment.

Regenerative power 701 (thick solid line) according to the second embodiment when the power running notch input information 111 is received farther from the on-schedule deceleration start position 302C (position closer to the next station stop position 301) increases the time during which the regenerative power is generated as compared with the regenerative power 402B (thin solid line) according to the first embodiment in the same case. Therefore, the driver assistance system according to the second embodiment can effectively use the regenerative power as compared with the driver assistance system according to the first embodiment.

[Third embodiment]

The characteristics of a driver assistance system according to a third embodiment are different from those of the first and second embodiments in that a deceleration pattern for more effectively using regenerative power while avoiding early arrival of a deceleration-side train is generated by adjusting the speed of the deceleration-side train.

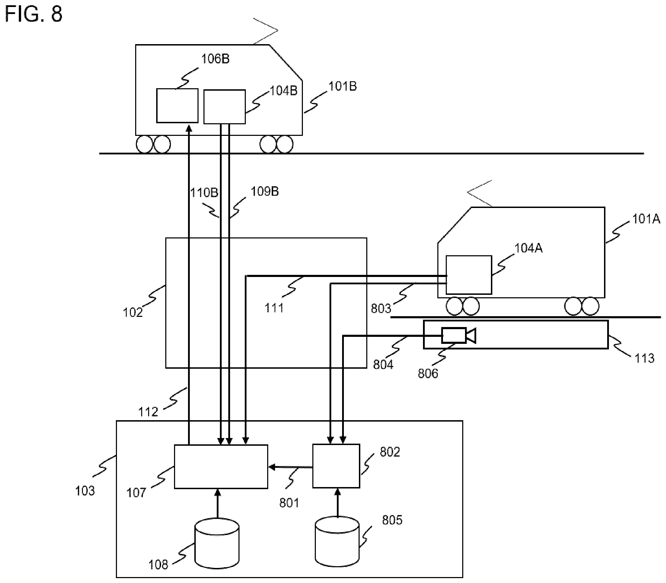

FIG. 8 is a diagram illustrating a configuration of a driver assistance system according to the third embodiment of the present invention and a train to be a driver assistance target.

The driver assistance system according to the third embodiment is different from the driver assistance systems according to the first and second embodiments in the following points.

A ground-side device 103 newly includes a power running time prediction unit 802. The power running time prediction unit 802 uses a boarding rate 803 of a first train (power-running-side train) 101A and a congestion rate 804 of a station 113 as inputs, and calculates a power running start time 801 with reference to a congestion rate database 805 in response to these inputs. When the congestion rate 804 on the platform of the station 113 is high, or when the boarding rate 803 of the first train (power-running-side train) 101A is high, the power running start time 801 is delayed from the power running start time on the schedule because a dwell time of passengers is longer than usual.

Here, as a method of measuring the congestion rate 804, for example, a method of measuring from a captured image of a camera 806 installed on the platform of the station 113 is adopted.

As a method of measuring the boarding rate 803, for example, a method of measuring from the vehicle load of the first train (power-running-side train) 101A is adopted.

In addition, a method is used in which the dwell time of passengers corresponding to the congestion rate of the station and the boarding rate of the train is accumulated in the congestion rate database 805, and the dwell time of the corresponding train is estimated from the measured congestion rate 804 and boarding rate 803.

In addition to the same inputs as in the first and second embodiments, a calculation unit 107 receives the power running start time 801 calculated by the power running time prediction unit 802.

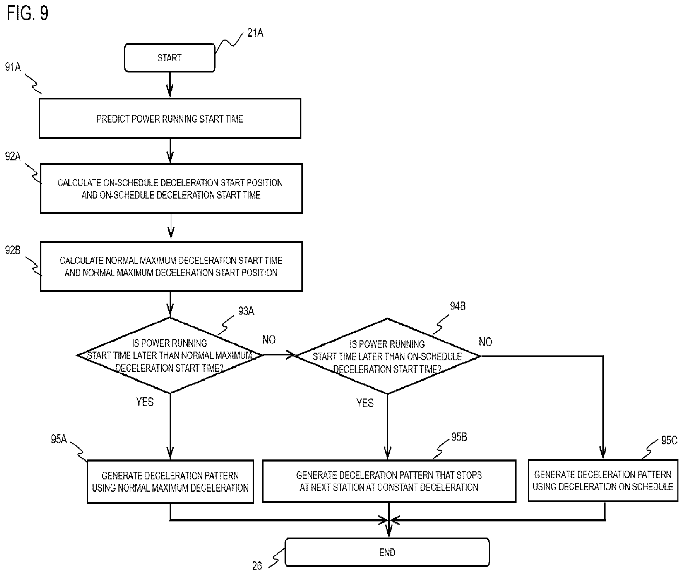

FIG. 9 is a diagram illustrating a flow (flowchart) of processing executed by the calculation unit 107 and the power running time prediction unit 802 included in the ground-side device 103 of the driver assistance system in the case of the third embodiment.

In a process 91A, the power running time prediction unit 802 predicts the power running start time 801 with respect to the schedule time of the first train (power-running-side train) 101A from the congestion rate 804 on the platform of the station 113 and the boarding rate 803 of the train 101A. Thereafter, the processing proceeds to a process 92A.

In the process 92A, the calculation unit 107 calculates, for the second train (deceleration-side train) 101B, a deceleration start position (on-schedule deceleration start position 302C) necessary for stopping at the next station at the next station stop time on the schedule at the deceleration on the schedule and the time at the deceleration start (on-schedule deceleration start time 1002C), and the processing proceeds to a process 92B.

In the process 92B, the calculation unit 107 calculates a normal maximum deceleration start time 1002A and a normal maximum deceleration start position 1001A when the train stops at the next station at the arrival time on the schedule using the normal maximum deceleration for the second train (deceleration-side train) 101B, and the processing proceeds to a conditional branch 93A.

In the conditional branch 93A, the calculation unit 107 compares the power running start time 801 with the normal maximum deceleration start time 1002A, and if the power running start time 801 is later than the normal maximum deceleration start time 1002A (YES), the processing proceeds to a process 95A, and otherwise (NO), the processing proceeds to a branch 94B.

In the conditional branch 94B, the calculation unit 107 compares the power running start time 801 with the on-schedule deceleration start time 1002C, and if the power running start time 801 is later than the on-schedule deceleration start time 1002C (YES), the processing proceeds to a process 95B, and otherwise (NO), the processing proceeds to a process 95C.

In the process 95A, the calculation unit 107 generates, for the second train (deceleration-side train) 101B, a deceleration pattern 1003A for stopping at the next station stop position 301 at the normal maximum deceleration, and sets the deceleration pattern 1003A as the target deceleration pattern 112.

In the process 95B, the calculation unit 107 generates, for the second train (deceleration-side train) 101B, a deceleration pattern 1003B that starts deceleration from the power running start time 801 and stops at the next station at a constant deceleration β, and sets the deceleration pattern 1003B as the target deceleration pattern 112.

In the process 95C, the calculation unit 107 generates a deceleration pattern 303C for the second train (deceleration-side train) 101B to stop at the next station at the deceleration on the schedule, and sets the deceleration pattern 303C as the target deceleration pattern 112.

As the deceleration β and a speed $v_0$, values satisfying the simultaneous equations of the equations (3.1) to (3.4) are respectively given. Accordingly, the arrival time on the schedule can be satisfied.

Here, time: t, speed: v, position: x are variables, remaining time: Δt, remaining distance: Δx, and time until the power running start: t1.

[Equation 9]

$$v(t) = \begin{cases} v_0, & t < t_1 \\ v_0 - \beta_2(t - t_1), & t \geq t_1 \end{cases} \qquad \text{Equation (3.1)}$$

[Equation 10]

$$x(t) = \int v(t)dt \qquad \text{Equation (3.2)}$$

[Equation 11]

$$v(\Delta t) = 0 \qquad \text{Equation (3.3)}$$

[Equation 12]

$$x(\Delta t) = \Delta x \qquad \text{Equation (3.4)}$$

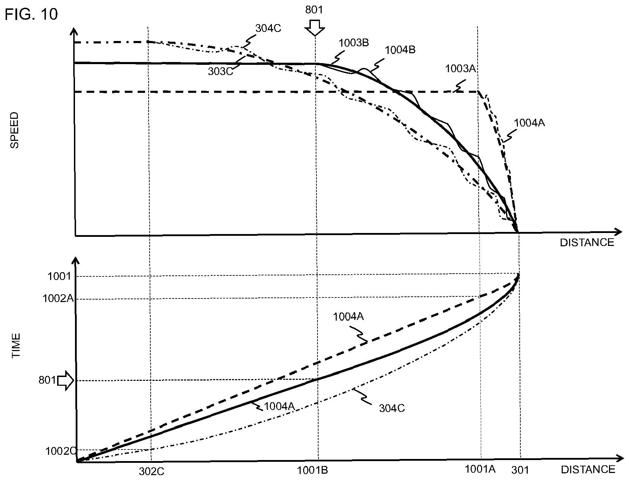

FIG. 10 is a diagram illustrating a driving curve of the second train (deceleration-side train) 101B according to the flowchart illustrated in FIG. 9.

(A) When the power running start time 801 is earlier than the on-schedule deceleration start time (the time at which the train reaches the on-schedule deceleration start position 302C), the calculation unit 107 generates the deceleration pattern 303C in which deceleration is started from the on-schedule deceleration start position 302C and the speed becomes 0 at the next station stop position 301.

A driving control device 106B controls the speed of the second train (deceleration-side train) 101B to follow the target deceleration pattern 112 (deceleration pattern 303C) received from the calculation unit 107, so that the second train (deceleration-side train) 101B travels like a travel history 304C.

(B) When the power running start time 801 is later than the on-schedule deceleration start time 1002C and earlier than the normal maximum deceleration start time 1002A, the calculation unit 107 generates the deceleration pattern 1003B in which deceleration is started at the power running start time 801 and the speed becomes 0 at the next station stop position 301.

The driving control device 106B controls the speed of the second train (deceleration-side train) 101B to follow the target deceleration pattern 112 (deceleration pattern 1003B) received from the calculation unit 107, so that the second train (deceleration-side train) 101B travels like a travel history 1004B.

(C) When the power running start time 801 is later than the normal maximum deceleration start time 1002A, the calculation unit 107 generates the deceleration pattern 1003A in which deceleration is started at the normal maximum deceleration start time 1002A and the speed becomes 0 at the next station stop position 301.

The driving control device 106B controls the speed of the second train (deceleration-side train) 101B to follow the target deceleration pattern 112 (deceleration pattern 1003A) received from the calculation unit 107, so that the second train (deceleration-side train) 101B travels like a travel history 1004A.

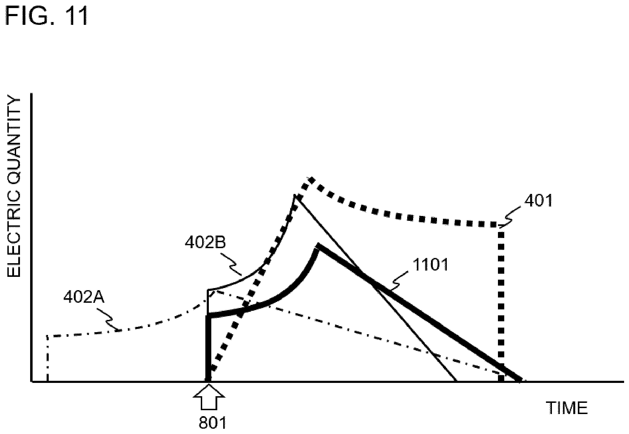

FIG. 11 is a diagram illustrating an effect of the driver assistance system according to the third embodiment.

In the driver assistance system according to the third embodiment, the speed at the start of deceleration entering the deceleration pattern (303C, 1003B, 1003A) differs as illustrated in FIG. 10 according to the predicted power running start time 801. Therefore, the speed at the start of deceleration can be suppressed, whereby the deceleration can be controlled to be weaker. Therefore, regenerative power 1101 (thick solid line) has a waveform in which the deceleration is gentle (deceleration is suppressed) as compared with the regenerative power 402B (thin solid line) in the case of the first embodiment, and the regenerative power interchange amount can be increased as compared with the regenerative power 402A (alternate long and short dash line) in the case where there is no control by the driver assistance system.

As described above, according to the driver assistance system according to the third embodiment, it is possible to effectively use the regenerative power as the driving power of the train departing from the station while avoiding early arrival of the deceleration-side train.

[Fourth embodiment]

In the first to third embodiments, it is assumed that there is one deceleration-side train, but there is a possibility that there are a plurality of deceleration-side trains capable of generating regenerative power on the same feeder system. When there are a plurality of deceleration-side trains, for example, if the third embodiment is applied, the plurality of deceleration-side trains decelerate so as to be synchronized with the power-running-side train at the same time, so that it is assumed that the regenerative power generation amount exceeds the power running power consumption amount. At this time, there is a problem that the energy saving effect of the obtained regenerative power interchange is limited as compared with a disadvantage that the deceleration of the deceleration-side train is increased and the ride comfort is impaired. For this reason, it is necessary to select a deceleration-side train that actually performs the regenerative power interchange from the plurality of deceleration-side trains that can be regenerated.

The fourth embodiment is characterized in that a plurality of deceleration-side trains are compared and a deceleration-side train to be controlled is selected with respect to three conditions of the distance between the power-running-side and deceleration-side trains, the deceleration of the deceleration-side train, and the delay time of the deceleration-side train. The fourth embodiment is different from the third embodiment in this point.

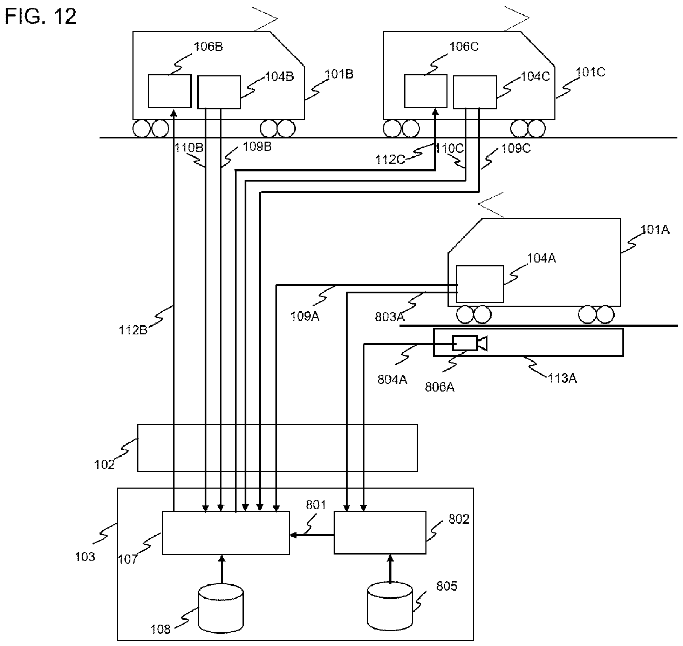

FIG. 12 is a diagram illustrating a configuration of a driver assistance system according to the fourth embodiment of the present invention and a train to be a driver assistance target. The system according to the fourth embodiment is different from the system according to the third embodiment in the following points.

In the fourth embodiment, in addition to a first train 101A and a second train 101B, a third train 101C is added as a deceleration-side train. The third train 101C exists on the same feeder system as the first train 101A and the second train 101B, and transmits its own position information 109C and speed information 110C from a third on-board device 104C to a ground-side device 103 via a transmission line 102, similarly to the second train 101B which is a deceleration-side train.

A calculation unit 107 of the ground-side device 103 generates a target deceleration pattern 112B of the second train (deceleration-side train) 101B and a target deceleration pattern 112C of the third train (deceleration-side train) 101C based on received train position information 109A, 109B, and 109C, speed information 110B and 110C, and a schedule database 108.

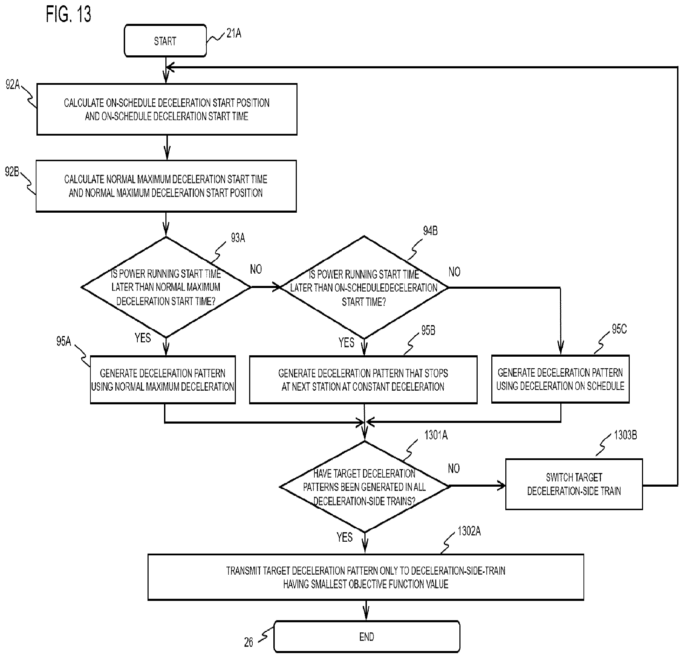

FIG. 13 is a diagram illustrating a flow (flowchart) of processing executed by the calculation unit 107 and a power running time prediction unit 802 included in the ground-side device 103 of the driver assistance system in the case of the fourth embodiment.

The fourth embodiment is different from the third embodiment in the following points. Hereinafter, processing steps different from those of the third embodiment will be described, and the other steps are the same as those of the third embodiment and will be omitted. In FIG. 13, for the sake of convenience of the size of the paper surface, the process 91A (FIG. 9) of predicting the power running start time following the start 21A in the third embodiment is included in the process 92A. Although omitted, in the fourth embodiment, the power running start time prediction process 91A is similarly executed following the start 21A.

As a step after creating the target deceleration pattern, a conditional branch 1301A is added, and it is determined whether or not the target deceleration patterns have been generated in all the deceleration-side trains. As a result of the determination, in a case where all have been generated (YES), the processing proceeds to a process 1302A, and in a case where all have not been generated (NO), the processing proceeds to a process 1303B.

In the process 1302A, an objective function having the distance between the power-running-side and deceleration-side trains, the deceleration of the deceleration-side-train, and the delay time of the deceleration-side-train as variables is set for the target deceleration pattern of each deceleration-side-train (in the fourth embodiment, the second train 101B and the third train 101C), and the target deceleration pattern 112 is transmitted only to the deceleration-side-train having the smallest value of the objective function. A deceleration pattern according to the schedule is transmitted to the other deceleration-side trains. Thereafter, the processing ends.

In the process 1303B, the deceleration-side train for which the target deceleration pattern 112 is to be generated is switched. Thereafter, the processing proceeds to a process 92A.

Next, the content of the objective function set in the process 1302A will be described. The following three variables are set as the variables of the objective function.

x: Distance between power-running-side and deceleration-side trains
a: Deceleration in deceleration pattern of deceleration-side train
t: Delay time from operation schedule of deceleration-side train

At this time, the objective function is defined as a function including variables x, a, and t, and as a specific example, a function having a linear correspondence with each variable is adopted.

In addition, the variables x and a are multiplied by the following gains k.

$k_x$: Gain for distance between power-running-side and deceleration-side trains
$k_a$: Gain for deceleration in deceleration pattern of deceleration-side train
$k_t$: Gain with respect to delay time from schedule of deceleration-side train.

At this time, the objective function has a definition shown in the following equation (4.1). [Equation 13]

$$f(x, a, t) = k_x x + k_a a - k_t t \qquad \text{Equation (4.1)}$$

In the fourth embodiment, this objective function is applied to all the deceleration-side trains on the same feeder line, and the target deceleration pattern 112 is transmitted only to the train having the smallest value of this objective function.

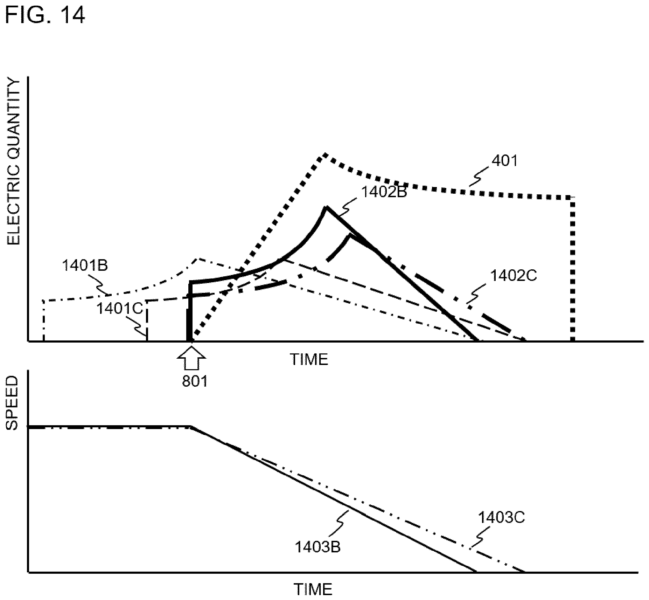

FIG. 14 is a diagram illustrating a case where only deceleration is used as a variable of an objective function for the effect of the driver assistance system according to the fourth embodiment. The upper diagram of FIG. 14 illustrates the characteristics of the power amount, and the lower diagram of FIG. 14 illustrates the characteristics of the speed.

In the above diagram, regenerative power 1401B (alternate long and short dash line) and 1401C (broken line) respectively indicate the regenerative power generation amounts of the second train (deceleration-side train) 101B and the third train (deceleration-side train) 101C when the control by the driver assistance system is not performed, that is, when the deceleration start time is not adjusted.

On the other hand, regenerative power 1402B (thick solid line) and 1402C (thick two-dot chain line) respectively indicate the regenerative power generation amounts of the second train (deceleration-side train) 101B and the third train (deceleration-side train) 101C when the deceleration start time is adjusted under the control of the driver assistance system.

In the lower diagram, speeds 1403B (solid line) and 1403C (two-dot chain line) respectively indicate speeds of the second train (deceleration-side train) 101B and the third train (deceleration-side train) 101C when the deceleration start time is adjusted.

When the objective function represented in Equation (4.1) is applied to the second train (deceleration-side train) 101B and the third train (deceleration-side train) 101C, the deceleration 1403C of the third train (deceleration-side train) 101C is smaller than the deceleration 1403B of the second train (deceleration-side train) 101B. Therefore, the calculation unit 107 transmits the target deceleration pattern 112C to the third train (deceleration-side train) 101C and adjusts the deceleration start time.

As described above, the train to be controlled is selected from the plurality of deceleration-side trains by the objective function having the deceleration as a variable, whereby the regenerative power interchange can be performed while suppressing the deterioration of the ride comfort.

Further, when an objective function using a plurality of variables is applied, a train to be controlled is selected by comprehensive determination of the plurality of variables.

[Fifth embodiment]

The fourth embodiment is an example in which the regenerative power is supplied to one power-running-side train from among the regenerative power of the plurality of deceleration-side trains, but the fifth embodiment is an example corresponding to a case where there are also a plurality of power-running-side trains.

When power is intermittently consumed from the power-running-side train, the deceleration of the deceleration-side train becomes excessive, and the ride comfort deteriorates. The fifth embodiment is different from the fourth embodiment in that the deceleration start time is changed so as to interchange the regenerative power to the plurality of power-running-side trains. In addition, it is a matter of course that the fifth embodiment can also be applied to the third embodiment in which the deceleration side and the power running side are one train.

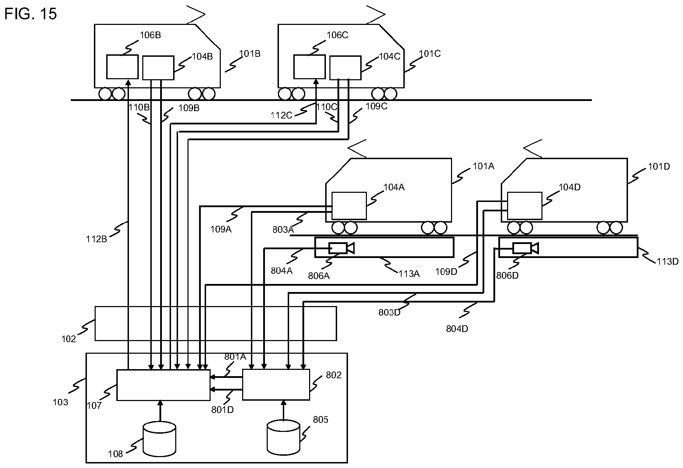

FIG. 15 is a diagram illustrating a configuration of a driver assistance system according to the fifth embodiment of the present invention and a train to be a driver assistance target. The system according to the fifth embodiment is different from the system according to the fourth embodiment in the following points.

In the fifth embodiment, in addition to the fourth embodiment, a fourth train 101D is added as a power-running-side train on the same feeder system. Similarly to the first train 101A, the fourth train 101D sends, from a fourth on-board device 104D, position information 109D and a boarding rate 803D of the fourth train 101D and a congestion rate 804D on the platform of a station 113D to a ground-side device 103 via a transmission line 102.

A power running time prediction unit 802 of the ground-side device 103 calculates a power running start time 801D of the fourth train 101D with reference to a congestion rate database 805 with respect to the boarding rate 803D of the fourth train 101D and the congestion rate 804D on the platform of the station 113D. As a method of acquiring the congestion rate 804D, for example, a method of measuring from a captured image of a camera 806D installed on the platform of the station 113D is adopted.

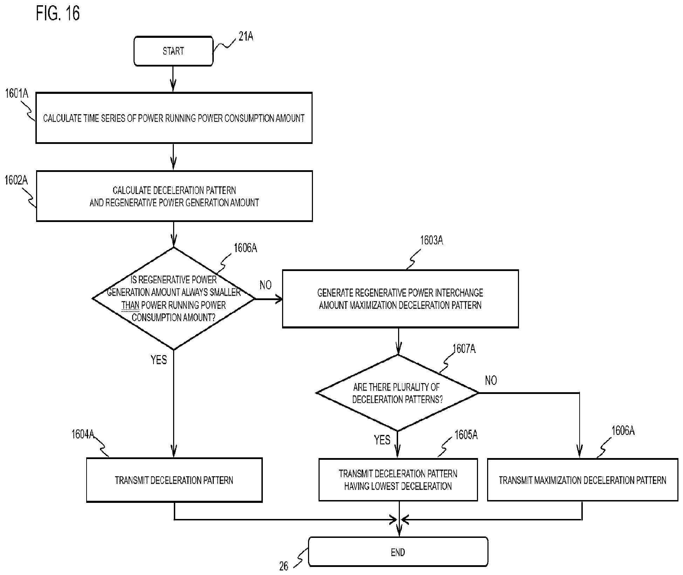

FIG. 16 is a diagram illustrating a flow (flowchart) of processing executed by a calculation unit 107 and a power running time prediction unit 802 included in the ground-side device 103 of the driver assistance system in the case of the fifth embodiment.

In a process 1601A, the calculation unit 107 calculates the time series of the power running power consumption amount in the entire feeder system from the predicted power running start time (in FIG. 15, 801A or 801D) and the traveling speed on the schedule for all the power-running-side trains on the same feeder system. Thereafter, the processing proceeds to a process 1602A.

In the process 1602A, the calculation unit 107 calculates, for all the deceleration-side trains on the same feeder system, a deceleration pattern necessary for stopping at the next station at the next station stop time on the schedule at the deceleration on the schedule, and a regenerative power generation amount in the entire feeder system at that time. Thereafter, the process proceeds to a conditional branch 1606A.

In the conditional branch 1606A, the calculation unit 107 determines whether the regenerative power generation amount is always smaller than the power running power consumption amount. As a result of the determination, in a case where the regenerative power generation amount is always small (YES), the processing proceeds to a process 1604A, and otherwise (NO), the processing proceeds to a process 1603A.

In the process 1604A, the calculation unit 107 transmits the deceleration pattern generated in the process 1602A as the target deceleration pattern 112 to the plurality of deceleration-side trains. Thereafter, the processing ends.

In the process 1603A, the calculation unit 107 generates a deceleration pattern that maximizes the regenerative power interchange amount by changing the deceleration while keeping to stop at the next station at the next station stop time on the schedule for all the deceleration-side trains on the same feeder system.

An example of a specific generation method will be described below. The deceleration from the deceleration on the schedule to the normal maximum deceleration is divided for each predetermined resolution. A regenerative power waveform from the current time to the stop time is calculated for each of the deceleration-side trains that perform regeneration for each divided deceleration. One regenerative power waveform is selected for each deceleration-side train, and a total value of all deceleration-side trains is generated as an overall regenerative power waveform. Here, the regenerative power waveform is selected in a brute-force manner. The overall regenerative power waveform is compared with the overall power running power consumption waveform, and when the overall regenerative power waveform constantly falls below the overall power running power consumption waveform, a deceleration pattern of each regenerative train for generating the overall regenerative power waveform is generated. Thereafter, the process proceeds to a conditional branch 1607A.

In the conditional branch 1607A, the calculation unit 107 determines whether there are a plurality of deceleration patterns that maximize the regenerative power interchange amount. As a result of the determination, if there are a plurality of deceleration patterns (YES), the processing proceeds to a process 1605A, and if there are no plurality of deceleration patterns (NO), the processing proceeds to a process 1606A.

In the process 1605A, the calculation unit 107 transmits a deceleration pattern having the lowest deceleration among a plurality of deceleration patterns as the target deceleration pattern 112 to the corresponding deceleration-side train. Thereafter, the processing ends.

In the process 1606A, the calculation unit 107 transmits the deceleration pattern for maximization as the target deceleration pattern 112 to the deceleration-side train in which the deceleration pattern for maximization exists. Thereafter, the processing ends.

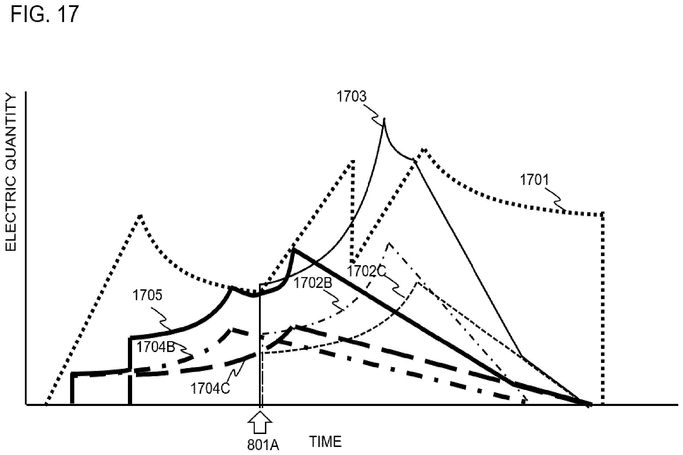

FIG. 17 is a diagram illustrating an effect of the driver assistance system according to the fifth embodiment.

The overall power running power consumption waveform of the first train 101A and the fourth train 101D which are the power-running-side trains is 1701 (dotted line).

At the power running start time 801A of the first train (power-running-side train) 101A, the regenerative power generation amount in the deceleration pattern when the deceleration start time of the second train (deceleration-side train) 101B is adjusted is set to 1702B (thin one-dot chain line), and the regenerative power generation amount in the deceleration pattern when the deceleration start time of the third train (deceleration-side train) 101C is adjusted is set to 1702C (thin broken line).

Then, the overall regenerative power waveform (that is, the overall regenerative power waveform when the deceleration start time of the second train (deceleration-side train) 101B and the third train (deceleration-side train) 101C is adjusted to the power running start time 801A of the first train (power-running-side train) 101A) that is the sum of the two regenerative power generation amounts 1702B and 1702C is 1703 (thin solid line).

On the other hand, the regenerative power amount in the case of the deceleration pattern that maximizes the regenerative power interchange amount in the second train (deceleration-side train) 101B obtained in the process 1603A is set to 1704B (thick one-dot chain line), and the regenerative power amount in the case of the deceleration pattern that maximizes the regenerative power interchange amount in the third train (deceleration-side train) 101C is set to 1704C (thick broken line).

Then, the overall regenerative power waveform in the deceleration pattern that maximizes the regenerative power interchange amount is 1705 (thick solid line) as the sum of the two regenerative power generation amounts 1704B and 1704C.

In the overall regenerative power waveform 1703 (thin solid line) when the deceleration start time is adjusted, since the regenerative power interchange destination is concentrated on one power-running-side train, a period exceeding the overall power running power consumption waveform 1701 (dotted line) occurs, and the regenerative power is lost.

On the other hand, since the overall regenerative power waveform 1705 (thick solid line) in the case of the deceleration pattern in which the regenerative power interchange amount is maximized does not exceed the overall power running power consumption waveform 1701 (dotted line), efficient regenerative power interchange can be performed, and regenerative power interchange at a lower deceleration can be performed.

In this manner, by changing the deceleration of the plurality of deceleration-side trains, obtaining the power consumption of the power-running-side train and the regenerative power amount of the deceleration-side train, and obtaining the deceleration pattern that maximizes the regenerative power interchange, it is possible to perform the regenerative power interchange while suppressing the increase in the deceleration and suppressing the deterioration of the ride comfort.

Although the embodiments of the present invention have been described above, the present invention is not limited to the above-described embodiments, and various modifications can be made without departing from the gist of the present invention.

Reference Signs List

101A first train
101B second train
101C third train
101D fourth train
102 transmission line
103 ground-side device

104A first on-board device
104B second on-board device
104C third on-board device
104D fourth on-board device
106B (second) driving control device
106C (third) driving control device
107 calculation unit
108 schedule database
109 (109A, 109B, 109C, 109D) position information
110 (110B, 110C) speed information
111 power running notch input information
112 (112B, 112C) target deceleration pattern
113 (113A, 113D) station (first station, second station)
301 next station stop position
302A, 1001A normal maximum deceleration start position
302B power running notch reception position
302C on-schedule deceleration start position
303A, 303B, 303C, 603, 1003A, 1003B deceleration pattern
304A, 304B, 304C, 604, 1004A, 1004B travel history
401 power running power
402A conventional regenerative power
402B regenerative power according to first embodiment
601 deceleration change point (switching position between
first deceleration and second deceleration)
602A first deceleration pattern
602B second deceleration pattern
701 regenerative power according to second embodiment
801 power running start time
802 power running time prediction unit
803 (803A, 803D) boarding rate
804 (804A, 804D) congestion rate
805 congestion rate database
806 camera
1002A normal maximum deceleration start time
1002C on-schedule deceleration start time
1101 regenerative power according to third embodiment
1401B, 1401C regenerative power generation amount when deceleration start time is not adjusted
1402B, 1402C regenerative power generation amount when deceleration start time is adjusted
1701 overall power running power consumption waveform of power-running-side train
1702B, 1702C regenerative power generation amount when deceleration start time is adjusted
1703 overall regenerative power waveform when deceleration start time is adjusted
1704B, 1704C regenerative power amount in case of deceleration pattern in which regenerative power interchange amount is maximized
1705 overall regenerative power waveform in deceleration pattern in which regenerative power interchange amount is maximized

## Claims

1. A driver assistance system comprising:

   a first on-board device mounted on at least one stopping train;
   a second on-board device mounted on at least one traveling train; and
   a ground-side device that communicates information with the first on-board device and the second on-board device via a transmission line,
   wherein the ground-side device generates a deceleration pattern of the traveling train based on power running start information of the stopping train obtained from at least reception information from the first on-board device, and transmits the deceleration pattern to the second on-board device.

2. The driver assistance system according to claim 1, wherein the stopping train consumes regenerative power generated by traveling of the traveling train according to the deceleration pattern as power running power after power running start of the stopping train.

3. The driver assistance system according to claim 1 or 2,

   wherein the reception information is information about inputting a power running notch output from a cab of the stopping train, and
   the ground-side device generates the deceleration pattern using the power running start information as a trigger based on position information and speed information of the traveling train received from the second on-board device, and transmits the deceleration pattern to the second on-board device.

4. The driver assistance system according to any one of claims 1 to 3, wherein the ground-side device generates the deceleration pattern using two different decelerations switched during deceleration of the traveling train, and transmits the deceleration pattern to the second on-board device.

5. The driver assistance system according to claim 1 or 2,

   wherein the reception information is information of a boarding rate of the stopping train, and
   the ground-side device receives, via the transmission line, information of a congestion rate of a station where the stopping train is stopped from the station, predicts a power running start time of the stopping train from the boarding rate and the congestion rate to obtain the power running start information, generates the deceleration pattern using the power running start information as a trigger based on position information and speed information of the traveling train received from the second on-board device, and transmits the deceleration pattern to the second on-board device.

6. The driver assistance system according to claim 5, wherein, when there are a plurality of the traveling trains, the ground-side device generates the deceleration pattern for all the plurality of the traveling trains, selects a deceleration pattern having a smallest value of an objective function based on a relationship between the stopping train and a traveling state of each of the plurality of the traveling trains from all the generated deceleration patterns, and transmits the deceleration pattern to the second on-board device.

7. The driver assistance system according to claim 6, wherein the objective function has at least one of a distance between the stopping train and the traveling train, a deceleration of the traveling train, and a delay time from an operation schedule of the traveling train as a variable.

8. The driver assistance system according to claim 1 or 2,

   wherein, when there are a plurality of the traveling trains and a plurality of the stopping trains, reception information from the first on-board device is information of a boarding rate of each of the plurality of the stopping trains, and
   the ground-side device receives information of a congestion rate of each of stations where the plurality of the stopping trains are stopped from each of the stations via the transmission line, predicts a power running start time of each of the plurality of the stopping trains from the boarding rate and the congestion rate to obtain the power running start information, calculates a power running power consumption waveform of all the plurality of the stopping trains from the power running start information, generates a deceleration pattern of the plurality of the traveling trains satisfying that a regenerative power waveform generated in all the plurality of the traveling trains does not exceed the power running power consumption waveform, and transmits the deceleration pattern to the second on-board device.

9. The driver assistance system according to claim 8, wherein, when the ground-side device generates a plurality of deceleration patterns of the plurality of the traveling trains satisfying that a regenerative power waveform generated by all the plurality of the traveling trains does not exceed the power running power consumption waveform, the ground-side device selects a deceleration pattern having a lowest deceleration and transmits the deceleration pattern to the second on-board device.

10. A driver assistance method, comprising, by a ground-side device, obtaining power running start information of at least one stopping train from information received from the stopping train, generating a deceleration pattern of at least one traveling train based on the power running start information, and transmitting the deceleration pattern to the traveling train.

**11.** The driver assistance method according to claim 10,

wherein the received information is information about inputting a power running notch output from a cab of the stopping train, and

the ground-side device generates the deceleration pattern using the power running start information as a trigger based on position information and speed information of the traveling train, and transmits the deceleration pattern to the traveling train.

**12.** The driver assistance method according to claim 10,

wherein the received information is information of a boarding rate of the stopping train, and

the ground-side device further receives the position information and speed information of the traveling train from the traveling train, receives information of a congestion rate of a station where the stopping train is stopped from the station, predicts a power running start time of the stopping train from the boarding rate and the congestion rate to obtain the power running start information, and generates the deceleration pattern using the power running start information as a trigger based on the position information and the speed information.

**13.** The driver assistance method according to claim 12, wherein, when there are a plurality of the traveling trains, the ground-side device generates the deceleration pattern for all the plurality of the traveling trains, sets an objective function based on a relationship between the stopping train and a traveling state of each of the plurality of the traveling trains for all the generated deceleration patterns, selects a deceleration pattern having a smallest value of the objective function, and transmits the selected deceleration pattern to the traveling train corresponding to the deceleration pattern.

**14.** The driver assistance method according to claim 10,

wherein, when there are a plurality of the traveling trains and a plurality of the stopping trains, the received information is information of a boarding rate of each of the plurality of the stopping trains, and

the ground-side device

further receives information of a congestion rate of each of stations where the plurality of the stopping trains are stopped from each of the stations,

predicts a power running start time of each of the plurality of the stopping trains from the boarding rate and the congestion rate to obtain the power running start information,

calculates a power running power consumption waveform of all the plurality of the stopping trains from the power running start information,

generates a deceleration pattern of the plurality of the traveling trains satisfying that a regenerative power waveform generated in all the plurality of the traveling trains does not exceed the power running power consumption waveform, and

transmits the generated deceleration pattern to the plurality of the traveling trains.

FIG. 1

FIG. 2

```
                    ┌─────────────┐
                    │    START    │ ╱ 201
                    └──────┬──────┘
                           │
                           ▼
202 ╲   ┌──────────────────────────────────────────────┐
        │ CALCULATE ON-SCHEDULE DECELERATION START      │
        │ POSITION                                       │
        └──────────────────┬───────────────────────────┘
                           │
                           ▼
203 ╲   ┌──────────────────────────────────────────────┐
        │ CALCULATE NORMAL MAXIMUM DECELERATION START   │
        │ POSITION                                       │
        └──────────────────┬───────────────────────────┘
```

IS CURRENT POSITION CLOSER TO NEXT STATION STOP POSITION? — 204

NO

HAS POWER RUNNING NOTCH INPUT INFORMATION BEEN INPUT? — 205

NO

YES

YES

IS POWER RUNNING NOTCH RECEPTION POSITION CLOSER TO NEXT STATION STOP POSITION? — 206

NO

YES

207A — GENERATE DECELERATION PATTERN USING NORMAL MAXIMUM DECELERATION

207B — GENERATE DECELERATION PATTERN USING CONSTANT DECELERATION

207C — GENERATE DECELERATION PATTERN USING DECELERATION ON SCHEDULE

209 — END

FIG. 3

FIG. 4

FIG. 5

```
                        ┌──────────────┐
                        │    START     │────⟍ 201
                        └──────┬───────┘
                               │
        ┌──────────────────────▼──────────────────────────┐
202 ⟍  │ CALCULATE ON-SCHEDULE DECELERATION START POSITION │
        └──────────────────────┬──────────────────────────┘
                               │
        ┌──────────────────────▼──────────────────────────┐
203 ⟍  │ CALCULATE NORMAL MAXIMUM DECELERATION START POSITION │
        └──────────────────────┬──────────────────────────┘
```

**204**
IS CURRENT POSITION CLOSER TO NEXT STATION STOP POSITION?  —NO→

**205**
HAS POWER RUNNING NOTCH INPUT INFORMATION BEEN INPUT?  —NO→

YES (204)

YES (205)

**206**
IS CURRENT POSITION CLOSER TO NEXT STATION STOP POSITION?  —NO→

YES (206)

**207A**
GENERATE DECELERATION PATTERN USING NORMAL MAXIMUM DECELERATION

**501**
GENERATE FIRST DECELERATION PATTERN

**207C**
GENERATE DECELERATION PATTERN USING DECELERATION ON SCHEDULE

**502**
GENERATE SECOND DECELERATION PATTERN

**503**
GENERATE DECELERATION PATTERN IN WHICH FIRST DECELERATION PATTERN IS SWITCHED TO SECOND DECELERATION PATTERN

**209**
END

FIG. 6

FIG. 7

FIG. 8

FIG. 9

```
                                    ┌──────────────┐   21A
                                    │    START     │
                                    └──────┬───────┘
                                           │
91A    ┌───────────────────────────────────▼────────────────────────────┐
       │            PREDICT POWER RUNNING START TIME                     │
       └───────────────────────────────────┬────────────────────────────┘
                                            │
92A    ┌───────────────────────────────────▼────────────────────────────┐
       │   CALCULATE ON-SCHEDULE DECELERATION START POSITION             │
       │    AND ON-SCHEDULE DECELERATION START TIME                      │
       └───────────────────────────────────┬────────────────────────────┘
                                            │
92B    ┌───────────────────────────────────▼────────────────────────────┐
       │  CALCULATE NORMAL MAXIMUM DECELERATION START TIME               │
       │   AND NORMAL MAXIMUM DECELERATION START POSITION                │
       └───────────────────────────────────┬────────────────────────────┘
                                            │
```

93A — IS POWER RUNNING START TIME LATER THAN NORMAL MAXIMUM DECELERATION START TIME?

NO

94B — IS POWER RUNNING START TIME LATER THAN ON-SCHEDULE DECELERATION START TIME?

NO

YES

YES

95A — GENERATE DECELERATION PATTERN USING NORMAL MAXIMUM DECELERATION

95B — GENERATE DECELERATION PATTERN THAT STOPS AT NEXT STATION AT CONSTANT DECELERATION

95C — GENERATE DECELERATION PATTERN USING DECELERATION ON SCHEDULE

```
                        ┌──────────────┐
                        │     END      │
                        └──────────────┘
              26
```

FIG. 10

FIG. 11

FIG. 12

FIG. 13

START ~ 21A

92A — CALCULATE ON-SCHEDULE DECELERATION START POSITION AND ON-SCHEDULE DECELERATION START TIME

92B — CALCULATE NORMAL MAXIMUM DECELERATION START TIME AND NORMAL MAXIMUM DECELERATION START POSITION

93A — IS POWER RUNNING START TIME LATER THAN NORMAL MAXIMUM DECELERATION START TIME?

94B — IS POWER RUNNING START TIME LATER THAN ON-SCHEDULE DECELERATION START TIME?

NO

NO

YES

YES

95A — GENERATE DECELERATION PATTERN USING NORMAL MAXIMUM DECELERATION

95B — GENERATE DECELERATION PATTERN THAT STOPS AT NEXT STATION AT CONSTANT DECELERATION

95C — GENERATE DECELERATION PATTERN USING DECELERATION ON SCHEDULE

1301A — HAVE TARGET DECELERATION PATTERNS BEEN GENERATED IN ALL DECELERATION-SIDE TRAINS?

NO

1303B — SWITCH TARGET DECELERATION-SIDE TRAIN

YES

1302A — TRANSMIT TARGET DECELERATION PATTERN ONLY TO DECELERATION-SIDE-TRAIN HAVING SMALLEST OBJECTIVE FUNCTION VALUE

26 — END

FIG. 14

FIG. 15

FIG. 16

```
                    ┌──────────────┐  21A
                    │    START     │
                    └──────┬───────┘
                           │
1601A  ┌───────────────────▼────────────────────────────────┐
       │ CALCULATE TIME SERIES OF POWER RUNNING POWER CONSUMPTION AMOUNT │
       └───────────────────┬────────────────────────────────┘
                           │
1602A  ┌───────────────────▼────────────────────────────────┐
       │         CALCULATE DECELERATION PATTERN              │
       │      AND REGENERATIVE POWER GENERATION AMOUNT       │
       └───────────────────┬────────────────────────────────┘
                           │
                           ▼          1606A
                        ╱──────╲                    1603A
                     ╱ IS REGENERATIVE  ╲    NO  ┌──────────────────────────────┐
                   ╱ POWER GENERATION AMOUNT ╲──▶│ GENERATE REGENERATIVE POWER INTERCHANGE │
                   ╲ ALWAYS SMALLER THAN   ╱     │ AMOUNT MAXIMIZATION DECELERATION PATTERN │
                     ╲ POWER RUNNING POWER ╱      └────────────────┬─────────────┘
                        ╲ CONSUMPTION   ╱                          │
                          ╲ AMOUNT? ╱                              ▼      1607A
                             │ YES                              ╱──────╲
                             │                               ╱ ARE THERE  ╲   NO
                             │                             ╱ PLURALITY OF    ╲───────┐
                             │                             ╲ DECELERATION     ╱      │
                             │                               ╲ PATTERNS?   ╱         │
                             │                                  ╲──────╱             │
                             │                                    │ YES              │
1604A ┌──────────────────┐   │   1605A ┌──────────────────┐        │ 1606A ┌──────────────────┐
      │ TRANSMIT         │   │         │ TRANSMIT DECELERATION │   │       │ TRANSMIT         │
      │ DECELERATION     │   │         │ PATTERN HAVING LOWEST │   │       │ MAXIMIZATION     │
      │ PATTERN          │   │         │ DECELERATION          │   │       │ DECELERATION PATTERN │
      └────────┬─────────┘   │         └──────────┬───────────┘   │       └────────┬─────────┘
               │             │                    │               │                │
               └─────────────┴────────────────────┼───────────────┴────────────────┘
                                                  ▼
                                        ┌──────────────────┐
                                        │       END        │
                                        └──────────────────┘
                                      26
```

FIG. 17

<div align="center">

**INTERNATIONAL SEARCH REPORT**

</div>

| International application No. |
| --- |
| **PCT/JP2022/019267** |

**A.    CLASSIFICATION OF SUBJECT MATTER**

*B61L 27/00*(2022.01)i; *B60L 15/40*(2006.01)i
FI:   B61L27/00; B60L15/40 Z

According to International Patent Classification (IPC) or to both national classification and IPC

**B.    FIELDS SEARCHED**

Minimum documentation searched (classification system followed by classification symbols)

B61L27/00; B60L15/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 2000-198444 A (NIPPON SIGNAL CO LTD) 18 July 2000 (2000-07-18)         paragraphs [0011], [0015], fig. 1-4 | 1-5, 10-12 |
| A | | 6-9, 13-14 |
| Y | JP 9-104347 A (HITACHI LTD) 22 April 1997 (1997-04-22)         paragraphs [0008]-[0011], fig. 1 | 1-5, 10-12 |
| Y | JP 2010-136561 A (RAILWAY TECHNICAL RES INST) 17 June 2010 (2010-06-17)         paragraphs [0046], [0050], fig. 1 | 1-5, 10-12 |
| Y | JP 2012-192860 A (RAILWAY TECHNICAL RES INST) 11 October 2012 (2012-10-11)         paragraph [0020] | 3-4, 11 |
| Y | JP 2000-198443 A (NIPPON SIGNAL CO LTD) 18 July 2000 (2000-07-18)         paragraphs [0018], [0023]-[0030], fig. 1-5 | 5, 12 |
| Y | JP 2017-144907 A (HITACHI LTD) 24 August 2017 (2017-08-24)         paragraphs [0017]-[0079], fig. 1-14 | 5, 12 |

☑ Further documents are listed in the continuation of Box C.        ☑ See patent family annex.

| | |
| --- | --- |
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **09 June 2022** | **21 June 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2022/019267** |

**C.     DOCUMENTS CONSIDERED TO BE RELEVANT**

| Category* | Citation of document, with indication, where appropriate, of the relevant passages | Relevant to claim No. |
| --- | --- | --- |
| Y | JP 2020-137227 A (TOSHIBA CORP) 31 August 2020 (2020-08-31) paragraphs [0053]-[0056], fig. 1 | 5, 12 |
| A | JP 2009-67206 A (TOSHIBA CORP) 02 April 2009 (2009-04-02) paragraphs [0045]-[0055], fig. 6 | 1-14 |

Form PCT/ISA/210 (second sheet) (January 2015)

INTERNATIONAL SEARCH REPORT
Information on patent family members

International application No.

**PCT/JP2022/019267**

| Patent document cited in search report | | | Publication date (day/month/year) | Patent family member(s) | | | Publication date (day/month/year) |
|---|---|---|---|---|---|---|---|
| JP | 2000-198444 | A | 18 July 2000 | (Family: none) | | | |
| JP | 9-104347 | A | 22 April 1997 | (Family: none) | | | |
| JP | 2010-136561 | A | 17 June 2010 | (Family: none) | | | |
| JP | 2012-192860 | A | 11 October 2012 | (Family: none) | | | |
| JP | 2000-198443 | A | 18 July 2000 | (Family: none) | | | |
| JP | 2017-144907 | A | 24 August 2017 | (Family: none) | | | |
| JP | 2020-137227 | A | 31 August 2020 | KR | 10-2020-0100521 | A | |
| | | | | CN | 111572600 | A | |
| JP | 2009-67206 | A | 02 April 2009 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017109576 A